# EUROPEAN PATENT APPLICATION

(11) **EP 3 951 749 A1**
(43) Date of publication of application: **09.02.2022**
(21) Application number: 20189757.6
(22) Date of filing: 06.08.2020
(51) Int. Cl.: G09B 23/30, A61B 34/10

(54) **COLLABORATIVE SYSTEM FOR VISUAL ANALYSIS OF A VIRTUAL MEDICAL MODEL**

(71) Applicant: Virtonomy GmbH, 81671 München (DE)
(72) Inventor: SONNTAG, Dr. Simon J., 81671 Munich (DE)
(74) Representative: Mader, Joachim

(57) **Abstract**

The present invention relates to a method and a collaborative system for visual analysis of a virtual medical model, particularly for medical product development and/or for anatomical comparison by multiple users. The system comprises a means for providing a virtual medical model and at least one visualization means, for generating a view and/or a scene of the virtual medical model. The visualization means is configured to send image data representing the generated view and/or scene to a display means. At least one view-manipulation means allows for manipulating a view of the virtual medical model by at least one user, wherein the view-manipulation means is configured to receive a user input and to translate the user input in vision change data of the virtual medical model or a sub-model thereof. A synchronization means, is configured to receive the vision change data, to synchronize the received vision change data and transmit synchronized vision change data to the at least one visualization means, wherein the view-manipulation means is configured to receive the synchronized vision change data and based on the received data to update the view and/or a scene of the virtual medical model.

## Description

### Field of the invention

The present invention relates to a method, a computer program implementing the method, and a collaborative system for visual analysis of a virtual medical model, particularly for medical product development and/or for anatomical comparison by multiple users.

### Background art

Medical product development costs have escalated in recent years while the criteria for regulatory approval have become increasingly stringent. In particular, clinical trial costs have risen tremendously within the last ten years, leading to a lack of medical innovation.

It is against this background virtual solutions that are gaining momentum. For example, medical information web platforms have been developed for streaming imaging and pathological data and for medical analysis; virtual patient models are designed to complement clinical decision making and to help develop medical products without risk to humans or animals; and the utilization of stereoscopic displays, virtual reality (VR), and augmented reality(AR) in the medical domain has steadily gained interest in the past years, for various applications like training and teaching, patient education and surgical planning.

In the article *"*Medical data visual synchronization and information interaction using Internet-based graphics rendering and message-oriented streaming" (cf. Informatics in Medicine Unlocked, vol. 17, p. 100253, 112019), Q. Zhang suggests a tool for visual real-time synchronization of rendered 3D content. Further, approaches of collaborative VR scenes have also been documented, for example, from P. V. F. Paiva, L. S. Machado and J. C. de Oliveira, "A Peer-to-Peer Multicast Architecture for Supporting Collaborative Virtual Environments (CVEs) in Medicine" (14th Symposium on Virtual and Augmented Reality, 2012).

These known approaches have in common that they focus on one specific imaging data set, such as a virtual representation of the anatomy of a single real patient and are not devised for multi-data visualization. For medical product development, however, a medical product, such as an implant, is generally not tailored to one specific anatomy but should be suitable for a large target population. Moreover, these known approaches are designed for either conventional monoscopic displays or for stereoscopic displays/VR.

It is therefore an object of the present invention to provide a system that addresses the issue of comparative visualization of multiple imaging data sets in a collaborative virtual environment, optionally with joined VR (and/or XR (extended reality)) and non-VR (and/or non-XR) access, specifically tailored to medical product development.

Further, in medical product development, effective communication is crucial, as multiple specialists from different disciplines, such as physicians, engineers, regulatory bodies, Contract Research Organizations (CROs) and manufacturers, have to work jointly together. Miscommunication can lead to massive time loss and unnecessary delay of medical innovations. Thus, it is important that information and content is effectively shared, especially in an increasingly global environment. Known communication means, such as emails and calls are not necessarily sufficient. Oftentimes, it is necessary to show what a user means. Polygonal 3D models of anatomy and medical device overcome this problem.

However, 3D polygonal model visualization tools are generally designed for a single user to use at one time. If users are working in teams, the viewer tool needs to be installed on each user's device (such as a computer, tablet, or smartphone) and a copy of all associated, possibly large files needs to be downloaded from e.g. a server and afterwards uploaded. Users need to make sure they are working with the latest version and are not overwriting each other's changes. Furthermore, one version usually consists of many files, of which all files need to be transferred. If a new file is introduced, for example representing a new part of an assembly, that file must be copied to all users who need it. Synchronous interaction with the models is not possible at all.

On the other hand, 3D-pdfs need neither additional installation effort, nor extensive downloading of possibly large files, but also have no possibility for synchronous interaction. Moreover, the interaction is very limited.

These drawbacks are lately addressed, using a single user visualization tool in combination with a screen sharing system with remote control. Thus, multiple users to collaborate becomes possible. However, disadvantages remain. One user must present and give the other users control over his computer. This is a severe security risk, especially when conferencing with external parties. Further it's not possible for the presenter to leave the conference: The user owning the version on which the team is working cannot easily leave the rest of the team alone to continue, without going through the uploading/downloading procedure mentioned before.

Thus, there is a need for a system that enables real multi-user collaboration. Inter alia, it would be desirable that every user can take control and interact with the model, can upload an additional model, and/or can save 3D scenes privately or shared. Further every user should have the same freedom of interaction and possibilities that the presenter is permitted. Another aspect is the inclusion of asynchronous communication, such as allowing for preparing and saving 3D scenes, which is shown in more detail later.

### Summary

These objects are achieved, at least partly, by a system, a method, and a computer program, as defined in the independent claims. Further aspects of the present invention are defined in the dependent claims.

In particular, the object is achieved by a collaborative system for visual analysis of a virtual medical model, particularly for medical product development and/or for anatomical comparison by multiple users. The system comprises a means for providing a virtual medical model and at least one visualization means, for generating a view and/or a scene of the virtual medical model. The visualization means is configured to send image data representing the generated view and/or scene to a display means. At least one view-manipulation means, allows manipulating a view of the virtual medical model by at least one user, wherein the view-manipulation means is configured to receive a user input and to translate the user input in vision change data of the virtual medical model or a sub-model thereof.

The system comprises further a synchronization means. The synchronization means is configured to receive vision change data (from the at least one view-manipulation means) and to synchronize the received vision change data. The synchronized vision change data are then transmitted (via the synchronization means) to the at least one visualization means. Further, the visualization means is configured to receive the synchronized vision change data and based on the received data to update the view and/or a scene of the virtual medical model.

The virtual medical model may include at least one of a virtual patient model, a model of a medical device and/or combinations thereof. Further, the virtual medical model may include sub-models, such as assemblies of the medical devices, a set of medical devices and/or a set of different virtual patient models.

Generally, a virtual patient model is a computer-based simulation or model that represents a real patient (patient specific virtual patient) or a group of patients (representative virtual patient). In the first case, the virtual patient is based on data being retrieved from a single patient. This data may be amended and/or modified after being retrieved to form the virtual patient. In the second case, the virtual patient is based on data being retrieved from a group of patients (at least two), wherein the data of the single patients contained in the group of patients is merged to form the virtual patient. In this case, the data of the single patients contained in the group of patients can be represented equally in the virtual patient or there can be a weighting (e.g., to minimize or exclude measurement failures or statistic deviations). The virtual patient (virtual patient model) may be a partial model of the real patient(s), i.e. it may represent only a part of interest (e.g. a body portion, such as the heart, a vessel, a bone, etc.). The virtual patient (virtual patient model) is not limited to a human model but may also include an animal model.

Further, the virtual patient model may be based on data being retrieved using a single technique or multiple, such as medical imaging techniques. For example, a virtual patient may be based on data, retrieved from one or more of the following: radiography, magnetic resonance imaging, molecular imaging, ultrasound imaging, elastography, photoacoustic imaging, tomography, echocardiography, near-infrared spectroscopy, positron emission tomography, single-photon emission computed tomography, magnetic particle imaging, and/or the like. Additionally, the virtual patient may include pathology data, tissue characteristics, patient meta data, and so forth.

The model of a medical device may be any medical device that is virtually modelled and which device is configured to be placed inside or on the surface of the body. For example, the medical device may be a medical implant for replacing body parts, delivering medication, monitoring body functions, and/or providing support to organs and tissues. The model of said medical device is a computer-based simulation or model, that represents the real medical device or a set of real medical devices. Said set may represent different design options of a real medical device (e.g. sizes, shapes, ...).

The means for providing a virtual medical model may include a structure for storing at least one virtual medical model (e.g. at least one of a virtual patient model and/or a model of a medical device) and/or a structure for transmitting data representing the virtual medical model to the system.

For example, the means for providing the virtual medical model may be adapted to download at least one virtual medical model from a database that may be a local database or a global database, such as a cloud-based database. The virtual medical model (or the multiple virtual models) may be stored centrally, such as on a web server.

Further, the means for providing the virtual medical model may be adapted to transmit at least one virtual medical model, or a copy thereof to multiple computing devices, on which at least some parts of the system are run. Thus, when the virtual medical model(s) is/are amended, the respective copies of the virtual medical model(s) can be updated on the respective computing device(s).

Further, the means for providing a virtual medical model may be adapted to generate a virtual medical model from data being retrieved e.g. from one or multiple patients or any intermediate data and/or from one or more medical devices.

The means for providing a virtual medical model, may be adapted to provide a single virtual medical model and/or multiple virtual medical models. For example, a virtual patient model may be provided that represents a group of different real patients and a model of a medical device may be provided that includes a set of sub-models, representing different parts and/or design options of the medical device.

Further, the system comprises at least one visualization means, for generating a view and/or a scene of the virtual medical model. Particularly, the visualization means may render a static picture and/or a dynamic scene, showing the provided virtual medical model. The dynamic scene may show the virtual medical model(s) under different viewing angles and/or in operation. For example, a scene may show a model of an aortic implant and the respective virtual patient model in different states, such as a systolic and diastolic state.

The at least one visualization means is configured to send image data representing the generated view and/or scene to a display means. In particular, the at least one visualization means is configured to send image data to a monoscopic display and/or a stereoscopic display. The system may comprise multiple display means, wherein a display means is associated to a user. Thus, the user can analyze the generated view and/or scene of the virtual medical model and based on the generated view/scene the user may manipulate the virtual model and/or the view of the virtual model(s).

The collaborative system may allow for synchronous and/or asynchronous visual analysis of the virtual medical model(s). Multiple users can collaboratively work together at the same time (synchronous mode) or each of the users can work on its own, preparing results for sharing later (asynchronous mode). In both, synchronous mode and asynchronous mode, the users work on the same data set representing the virtual medical model.

Further, the system comprises at least one view-manipulation means. The view-manipulation means allows for manipulating a view of the virtual medical model by at least one user. Particularly, the view-manipulation means is configured to receive a user input and to translate the user input in vision change data of the virtual medical model or a sub-model thereof. The translation may be any kind of data conversion, including the mere forwarding of the user input.

The user input may be generated by said user, using at least one of a mouse, a keyboard, a touch-based device, a trackball, a handheld controller, gesture control, gaze control, augmented reality controller, a virtual reality controller, an extended reality controller or any other kind of known input device.

In gesture control, the user input is generated based on human gestures, wherein gestures can originate from any bodily motion or state. Commonly originate from the user's face and/or hand(s). In gaze control, the user input is generated is based on a detected change of a direction of a users' gaze. This may include determining an angle and/or position of a user's visual attention, such as by determining the position and/or orientation of user's eyes, neck, head and/or the like. Further, position and/or orientations sensors (such as of a smart phone, or tablet, ...) can be utilized for generating a user input.

The vision change data may include at least one of:
- a change of a position of a virtual medical model, or at least one sub-model thereof,
- a change of an orientation of a virtual medical model, or at least one sub-model thereof,
- a change of a scaling of a virtual medical model, or at least one sub-model thereof,
- a change of a visibility and/or opacity of a virtual medical model, or at least one sub-model thereof,
- a result (such as a deformation of the model) of a device-device, device-tissue and/or tissue-tissue interaction
- a result (such as dynamics) of a fluid and/or particle simulation
- an average and/or standard deviation of anatomy
- a design iterations and/or alteration of a model of a medical device.

The synchronization means is configured to receive vision change data (from the at least one view-manipulation means) and to synchronize the received vision change data. In case the view-manipulation means forwards the user input, the synchronization means may be adapted to synchronize the received user input. Thus, conflicting data/user input can be avoided.

The system may include at least one central synchronization means and/or multiple decentral synchronization means. In case of a central synchronization means, the central synchronization means may transmit user specific synchronized vision change data (or user input) to different visualization means that are associated with a respective user and/or a computing device of a user. In case of multiple decentral synchronization means, each decentral synchronization means may be associated with a visualization means and therefore with a respective user and/or a computing device of a user. In this case every decentral synchronization means may be configured to transmit respective vision change data (or user input) to an associated visualization means.

The at least one visualization means of the system is configured to receive the synchronized vision change data (or user input). Based on the received data, the at least one visualization means is configured to update a view and/or a scene of the virtual medical model. In case the vision change data corresponds not to the entire virtual medical model, but only to a sub-model or some sub-models thereof, the visualization means may be adapted to update a view and/or a scene of the respective sub-model(s), only.

Further, the visualization means may be configured to update only specific attributes of virtual medical model, or at least one sub-model thereof. Thus, a position and/or orientation of a sub-model may be changed (as respective synchronized vision change data is received) and a user specific color highlighting and/or annotation of the sub-model is maintained. Thus, each user can utilize his favorite highlighting and/or annotations, while the position/orientation of the (sub-)model is changed.

The at least one view-manipulation means is typically arranged in a decentral manner, preferably on a computing device (e.g. a smartphone, a tablet, a notebook, a desktop computer, a stand-alone XR-headset, and/or the like) of a user, for example in the form of an app, browser-based, or the like. Providing the at least one view-manipulation means in a decentral manner allows for reduced signaling amount, as only vision change data (such as changes of a position and/or an orientation) of the virtual medical model(s), and/or respective sub-models thereof have to be uploaded, for updating a view/scene. Accordingly, real time (synchronous and/or asynchronous) collaboration becomes possible, even in a case of low network capacity. Further, synchronization is facilitated, as the vision change data (or the user input) can be directly synchronized.

The collaborative system enables multiple users to work together on one virtual medical model and to view and analyze a view and/or a scene (such as a 3D scene) of the virtual medical model jointly on different spread display means. Further, the collaborative system gives every participating user (depending on the user's rights) the possibility to directly interact with virtual medical model (i.e. the virtual patient model and/or the model of a medical device), with minimum human perceivable delay.

Further, the collaborative system may allow for population-based evaluation of medical devices (e.g. by fitting a model of a medical device in a virtual patient model, representing a respective population group) and anatomy comparison. Anatomy comparison includes the comparison of the anatomy of different real patients, or of a single patient at different points in time. The system may allow evaluating differences of multiple virtual patients of a target population and for highlighting differences. Further, a statistical morphometric model, representing a population may be generated. A comparison of a further virtual patient model and/or a model of a medical device to this statistical morphometric model makes evaluating a large database feasible in a very short time. Thus, medical device development can be significantly improved, as the medical device under development can be compared to a population in an early development state.

Further, as according to the collaborative system, only vision change data of the virtual medical model or a sub-model thereof need to be uploaded for updating a view/scene, the signaling amount is significantly reduced, compared to streaming a high quality video of a screen. Accordingly delay, and even more important motion-to-photon latency can be reduced. When interacting with the virtual medical model, the latency between the user input, such as a hand movement of the input device (e.g. a mouse) to move an object, and a corresponding displayed reaction (motion-to-photon latency) can be lowered. As a result, the collaborative system becomes independent of the quality of the available network connection. So where with conventional methods a slow network connection leads to low image quality or even such a high delay that operating the system becomes impossible, the present collaborative system allows for shared rendering (such as 3D rendering) of the generated view/scene and rendering quality doesn't degrade with available network quality.

The collaborative system allows for highly flexible work and communication using a virtual medical model: For example, a user begins work on a virtual medical model, representing an anatomy study, on his computing device. He/she later must interrupt his/her work, to leave for a conference. The collaborative system allows him/her to re-start his/her work on a different computing device, such as a web-platform on his/her mobile computing device. Here, he/she can continue his/her work exactly where he/she was interrupted. In a further scenario, another user wants to show a configuration, an interesting anatomy or a new idea for positioning or designing a medical device to a colleague. He/she simply saves a view and/or scene on his/her computing device, opens his/her work on a different device (e.g. a web-platform on his/her mobile computing device, such as a tablet) and walks over to his/her colleague for discussing his/her results. Of course, the colleague could also join the discussion virtually, using the collaborative system. Further the generated view/scene can be saved and reviewed individually and independently, in a later point in time.

The view manipulation means gives a user the possibility to directly interact with the provided virtual medical model. Inter alia, the user may opt for at least one of the following: real-time rendering, choosing between monoscopic or stereoscopic views/scenes, saving an exact state of a view/scene and a corresponding virtual model configuration, loading and adding further models and/or data; displaying and/or performing measurements (such as anatomical measurements); displaying, editing and/or creating annotations, displaying and/or creating points, lines and meshes of interest (of various dimensionality); manipulating an object of the virtual medical model and/or a sub-model thereof (including manipulating at least one of a position, an orientation, a scale, visibility, opacity, and the like); detecting and visualizing collisions of an object of the virtual medical model and/or a sub-model thereof (collision and/or overlap detection); selecting and/or grouping an object of the virtual medical model and/or sub-models thereof; defining a clipping plane (for providing cut views), displaying of imaging slices (such as 2D canvas, projection on 3D mesh plane, outlines of meshes, and/or the like), and/or the like. The respective user input is then translated in respective vision change data or forwarded by the view manipulation means. Further, the view manipulation means may allow the user to opt for report generation, e.g. for documentation, approval, regulatory and/or validation purposes.

The collaborative system may further comprise a guidance means that supports aligning a virtual model of a medical device within a virtual patient model, in case the virtual medical model comprises at least one virtual patient model and at least one virtual model of a medical device. The guidance means may suggest an initial position (or multiple possible initial positions) of the at least one model of the medical device within the at least one virtual patient model. In case multiple possible initial positions are suggested a user may choose a preferred position from the multiple suggested positions. The guidance means may be adapted to align the model of the medical device within the at least one virtual patient model automatically at a suggested and/or chosen initial position. The initial position may be included in the model of the medical device or may be determined by the system. Particularly, the initial position may be defined by at least one of an anatomical landmark(s), model's meta-data, boundary conditions, an attachment point(s), a result of a collision detection, a device-tissue interaction simulation, and/or the like. For example, the virtual model of a medical device may be a virtual model of a total artificial heart or a model or an artificial heart valve. The total artificial heart has to be located in the pericardium and the artificial heart valve such as a tricuspid valve replacement has to be located between the right atrium and the right ventricle of the virtual patient model. For aligning the virtual model of the medical device with the virtual patient model, further attributes, such as corresponding landmarks, may be used.

Further, the guidance means may limit possible movements of the model of the medical device within the virtual patient model. Thus, implantation and/or operation of the medical device can be simulated. For example, in case the model of the medical device represents a coronary bypass stent, the stent may be allowed to move only within a respective vessel of the virtual patient model. Thus, alignment of the model of the medical device with the virtual patient model is facilitated. In particular, manual fitting and/or aligning the model of the medical device in the virtual patient model is facilitated. The guidance means supports the user to virtually position the medical device and to generate meaningful views/scenes. Particularly, the guidance means may be adapted to suggest a predefined view/scene of the virtual medical model, such as of the aligned model of the medical device. The suggested predefined view/scenes may be automatically chosen, based on at least one of a pathology, a region of interest, a type of medical device (such as an implant), a critical area, defined in a collision detection, and/or the like.

The collaborative system may further comprise an interaction simulation means, that is configured to simulate interaction between at least one of a virtual patient model of the virtual medical model and/or a virtual model of a medical device with at least one further virtual patient model of the virtual medical model and/or at least one further virtual model of a medical device. Thus, the system allows for evaluating an interaction between a medical device and a further medical device (device-device-interaction), between a medical device and a structure (e.g. tissue) of a virtual patient model (device-tissue interaction), and between a structure of a first virtual patient model with a structure of a second virtual patient model (tissue-tissue interaction). The first and second virtual patient models may represent different real patients or the same real patient.

For example, collision of a medical device with a structure of the virtual patient model and/or a further medical device can be evaluated. This evaluation may be based on physical models of the specific anatomy and its pathology. Additional information like material properties, device meta-data and/or the like may be considered. Material properties maybe retrieved from imaging raw data and device data of the respective models and device meta-data may include device measurement requirements, which define material properties and their corresponding limits and tolerance, as well as attachment points (e.g. where device would be sewed to tissue) and boundary conditions, when a device collision and tissue interaction is being tested.

Further, anatomy of different patient or patient groups can be easily compared by comparing respective anatomical structures of different virtual patient models. The interaction simulation means may be based on geometrical analysis of the respective virtual medical models and may take into account further data, such as tissue elasticity, patient meta-data (sex, age, weight, size, state of health, pre-existing conditions, ...). Thus, the collaborative system may serve for evaluating differences of multiple virtual patients of a target population and/or for providing a visual comparison aid by e.g. aligning multiple virtual patients and highlighting their differences. A statistical morphometric model of a population may be displayed and the deviation from an average, "normal" patient can be calculated and highlighted. Further, the collaborative system may allow for collision detection. Here algorithms such as ray triangle intersection, or other equivalents may be used. Further, a surface and/or volume of the colliding vertexes may be estimated and displayed to visualize the collision and/or to give an optimized design/topology of the modelled medical device.

The results generated by the interaction simulation means can be displayed on the display means. For example, the result can be superimposed on a view/scene of the virtual medical model. For example, a force map, a stress map, a collision map, a series of deformed (3D-)meshes, and/or the like may be provided.

According to the collaborative system the at least one visualization means may send image data to at least one display means that may be a monoscopic display and/or a stereoscopic display. The image data representing the generated view and/or scene may be superimposed with further image data.

By superimposing further image data, an extended reality (XR) can be generated and e.g. collisions, or other simulation results, and/or annotations may be displayed. Further, the collaborative system may allow for a seamless change between a monoscopic view (such as single camera view on a conventional monitor) and a stereoscopic view (such as a view that is separately rendered for each eye). Further, the at least one visualization means may send image data to a first display means, being monoscopic display means and (at the same time) to a second display means, being stereoscopic display means. Thus, productivity is increased by taking advantage of both, monoscopic and stereoscopic views. Wherein monoscopic views are generally preferred e.g. for reading, stereoscopic views are generally preferred for 3D-model analysis, interaction and modulation. Particularly, motion parallax can be added as additional depth indication. Thereby improving the spatial understanding of the virtual medical model, such as an anatomy of a virtual patient model and the positioning of a medical device.

The collaborative system may comprise multiple view-manipulation means, with each of the view-manipulation means being associated with a user and allowing the user to manipulate a view of the virtual medical model. The view-manipulation means maybe configured to receive a user specific user input and to translate the user specific user input in user specific vision change data of the virtual medical model or a sub-model thereof. Further, the synchronization means may be configured to receive user specific vision change data, to synchronize the received user specific vision change data and to transmit user specific synchronized vision change data to the at least one visualization means. The view-manipulation means may be configured to receive the user specific vision change data and based on the received data to update the view and/or a scene of the virtual medical model user specifically. Accordingly, synchronous and asynchronous collaboration becomes possible. Multiple users may work jointly on the same virtual medical model, sharing the same view, or any user may work on said model having his own view.

The system may comprise multiple synchronization means. In this case, each synchronization means may be adapted to synchronize and/or prioritize received vison change data (corresponding to different user inputs) and transmit synchronized vision change data to an associated visualization means. Thus, collaborative multi-user participation is enabled. Alternatively, a single synchronization means may be provided, that may be adapted to synchronize and/or prioritize received vision change data (corresponding to different user inputs) from different users. In this case, the synchronization means may transmit synchronized vision change data to multiple associated visualization means, thereby enabling collaborative multi-user participation.

Optionally, an owner of an object of the virtual medical model maybe defined, to structure interaction and prohibit user input conflicts. This ownership can be transferred, so that every participating user has the possibility to take over control and manipulate the object respective object of the virtual medical model. In this case, the synchronization means maybe adapted to synchronize an ownership of an object of the virtual medical model, such as a sub-model. Only one owner per object may be allowed, thereby avoiding conflicts. Particularly, the synchronization means may be configured to transmit only vision change data from the owner of an objected, wherein change data associated with this object originating from a different user are not transmitted.

Further, the synchronization means may be configured to prioritize vison change data associated with a user input received from different users and/or to block vison change data associated with user input received from at least one user. This helps to avoid user input conflicts in the virtual medical model. In case another user than the viewing user manipulates an object, the change maybe smoothly animated to make up for delays.

Further, the collaborative system allows for synchronous and/or asynchronous visual analysis of the virtual medical model(s). Multiple users can collaboratively work together at the same time (synchronous mode) or each of the users can work on its own, preparing results for sharing later (asynchronous mode). In the synchronous mode the synchronization means may transmit user specific vision change data to respective visualization means, that is associated with the user input received from the owner of an object of the virtual medical model. In the asynchronous mode, the synchronization means may transmit only user specific vision change data to a visualization means, that is associated with the specific user. In both, synchronous mode and asynchronous mode, the users work on the same data set representing the virtual medical model.

The collaborative system may be configured to store a generated view and/or a scene of the virtual medical model and/or vision change data of the virtual medical model or a sub-model thereof. Thus, a user that stops or interrupts working on a first computing device can re-start his/her work on a further, second computing device. Further, storing generated views and/or scenes allows preparation of later conferences and discussions.

The collaborative system may be a web-based system that is configured to be run browser based. Particularly, the web-based system may comprise a first server, such as a web server, that hosts software components of the collaborative system. Accordingly, the first server may allow for downloading software instructions (code) to at least one local computing device, that is adapted to execute the respective software instructions. Thus, for example, at least one of the visualization means, the synchronization means and the view-manipulation means may be run on the at least one computing device, without a need for a local installation of said software components. Further, the first server may include the means for providing a virtual medical model, as described above. Additionally, a second server may be provided. The second server may be a streaming server and may be configured for exchange of vision change data and/or synchronized vision change data.

The collaborative system may further provide a communication channel for the users, wherein the communication channel may be a video and/or audio communication channel and/or may allow for screen sharing. For example, participating users may meet in a virtual conference room for discussing a previously generated view and/or scene. Further, the users may collaborate in real-time, using the virtual medical model (e.g. from starting form a previously generated view/scene). This visual, model-based communication can be supported by a video and/or audio communication channel. Thus, communication can be significantly improved.

The visualization means may be further configured to highlight interaction between different sub-models of the virtual medical model and/or different virtual patient models. In particular, results generated by the interaction simulation means, can be processed by the visualization means for being displayed on the display means. For example, interaction (such as collisions) between a medical device and a further medical device or between a medical device and a structure (e.g. tissue) of a virtual patient model can be highlighted. Further, differences between a structure of a first virtual patient model or model of a medical device and a structure of a second virtual patient model or model of a medical device can also be highlighted.

The collaborative system may further comprise a means for updating and/or amending the virtual medical model. This means allows the user for amending the virtual medical model. For example, the design of a model of a medical device may be adapted to allow fitting of a larger population.

The at least one synchronization means may be adapted to synchronize and/or prioritize updates and/or amendments of the virtual medical model. The synchronize/prioritize model may then replace the previously provided virtual medical model, or a new version of the provided virtual model is generated.

The various means of the collaborative system may each be implemented in hardware, software and/or combinations thereof. Further, the means and/or each of the means may be located centrally or may be distributed over several locations. Some of the means described above may be integrally formed or may be provided separately. Particularly, the visualization means and the synchronization means may be integrally formed. Additionally, or alternatively, the visualization means and the view-manipulation means may be integrally formed. The system may comprise multiple integrally formed visualization means and synchronization means and/or multiple integrally formed visualization means and view-manipulation means.

The object is further achieved by a method for collaborative visual analysis of a virtual medical model, particularly for medical product development and/or for anatomical comparison by multiple users, the method comprises the following steps: providing a virtual medical model; generating a view and/or a scene of the virtual medical model, and sending image data representing the generated view and/or scene to a display means; receiving a user input and translating the user input in vision change data of the virtual medical model or a sub-model thereof, synchronizing vision change data, and updating the view and/or the scene of the virtual medical model based on the synchronized vision change data of the virtual medical model or a sub-model thereof.

The method may be performed by a system as described above. The method may further comprise automatically aligning a virtual model of a medical device within a virtual patient model.

Further, the method may comprise simulating an interaction between at least one of a virtual patient model of the virtual medical model and/or a virtual model of a medical device with at least one of at least one further virtual patient model of the virtual medical model and/or at least one further virtual model of a medical device.

With the described method, all advantages described above with respect to the system can be achieved. Further, the method may be modified according to any method step, described above with respect to use of the collaborative system.

The object is further achieved by a computer program comprising instructions that, when being carried out by at least one processor, cause the processor to perform for performing a method, as specified above.

### Brief description of the figures

In the following, the accompanying figures are briefly described:
- Fig. 1: is a schematic diagram of an operating principle of a collaborative system;
- Fig. 2: is a schematic diagram of an operating principle of the system in a multi-user collaboration;
- Fig.3A: is a schematic view of a virtual patient model;
- Fig. 3B: is a schematic view of a further virtual patient model;
- Fig. 4: is a visualization of an output of an interaction simulation means, and
- Fig. 5: is a schematic diagram of a method for collaborative visual analysis of a virtual medical model.

### Detailed description of the figures

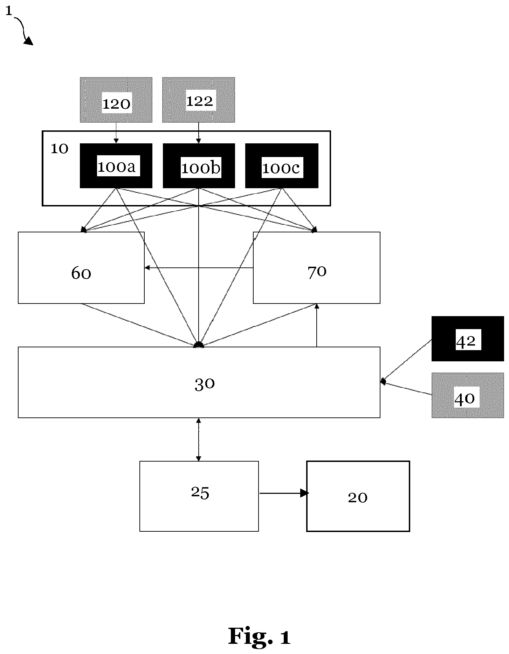

Fig. 1 is a schematic diagram of an operating principle of a collaborative system 1 for synchronous and/or asynchronous visual analysis of a virtual medical model 100a, 100b, 100c.

The virtual medical model 100a, 100b, 100c is provided by a means 10 for providing the virtual medical model. The virtual medical model 100a, 100b, 100c may comprise different sub-models, such as a virtual patient model 100a and/or a virtual model of a medical device 100b, and may further comprise meta-data 100c, including for example anatomical landmark(s), boundary conditions, an attachment point(s), a result of a collision detection, a device-tissue interaction simulation, patient-specific meta-data, and/or the like.

A virtual patient model 100a may be based on one or multiple anatomy data sets. These data sets may represent a single patient or multiple patients and maybe generated, using at least one of the following data acquisition techniques, such as radiography, magnetic resonance imaging, molecular imaging, ultrasound imaging, elastography, photoacoustic imaging, tomography, echocardiography, near-infrared spectroscopy, magnetic particle imaging, and/or the like. The means 10 for providing the virtual medical model may be adapted to generate a virtual patient model 100a from at least one anatomy data set, and/or may receive a previously generated virtual patient model 100a from a data base.

The virtual medical model (e.g. the patient model 100a, the model of the medical device 100b, and/or the like) may be a 3D or higher dimensional model and may optionally include corresponding meta-data. The meta-data may provide additional information of a related patient, such as pathology, gender, weight, etc.

Further, the system 1 comprises at least one visualization means 20. The visualization means 20 serves for generating a view and/or a scene of the virtual medical model 100a, 100b, 100c and is configured to send image data representing the generated view and/or scene to a display means (not shown in Fig. 1). The means 10 for providing a virtual medical model may further allow for amending or updating the virtual medical model, such as a virtual patient model 120 or a model of a medical device 122. Accordingly, the means 10 for providing a virtual medical model is optionally adapted for receiving amendments and/or updates of the virtual medical model, such as a virtual patient model 120 or a model of a medical device 122. Alternatively, the collaborative system may comprise a separate means (not shown) for updating and/or amending the virtual medical model. This means allows the user for amending the virtual medical model. Amendments and/or updates of the virtual medical model, or sub-models thereof, that are provided by different users may be synchronized via the synchronization means 25.

Further, the system 1 comprises at least one view-manipulation means 30, that allows for manipulating a view of the virtual medical model 100a, 100b, 100c by at least one user. The view-manipulation means 30 is configured to receive a user input 40 and to translate the user input 40 in vision change data of the virtual medical model 100a, 100b, 100c or a sub-model thereof. The translation may be any kind of data conversion, including the mere forwarding of the user input 40.

The system comprises further a synchronization means 25, that is configured to receive vision change data from the view-manipulation means 30, to synchronize the received vision change data and to transmit the synchronized vision change data to the at least one visualization means 20. The synchronization means 25 may further synchronize and/or prioritize vision change data associated with user inputs of different users to allow for multi-user collaboration in a synchronous and/or an asynchronous mode. Further, the synchronization means 25 may be adapted to synchronize an ownership of an object of the virtual medical model, such as a sub-model. Only one owner per object may be allowed, thereby avoiding conflicts.

The view manipulation means 30 may further allow a user to interact with the provided virtual medical model 100a, 100b, 100c. For example, the user may edit and/or create annotations 42 that can be superimposed over a generated view and/or scene of the virtual medical model.

The visualization means 20 is configured to receive the vision change data and based on the received data to update the view and/or a scene of the virtual medical model 100a, 100b, 100c that may be subsequently displayed on at least one display means. The at least one display means may include a monoscopic and/or a stereoscopic display means.

The collaborative system 1 optionally comprises a guidance means 60 that supports aligning a virtual model of a medical device 100b within a virtual patient model 100a. Aligning includes inter alia positioning (or suggesting at least one position) of the virtual model of a medical device 100b within a virtual patient model 100a, and/or limiting possible movements of the model of the medical device within the virtual patient model. Thus, implantation and/or operation of the medical device can be simulated. Further, the guidance means 60 may support the user to generate meaningful views/scenes of the virtual medical model.

Further the collaborative system 1 may comprise an interaction simulation means 70, that is configured to simulate interaction between at least one of a virtual patient model 100a of the virtual medical model and/or a virtual model of a medical device 100b with at least one of a further virtual patient model of the virtual medical model and/or at least one further virtual model of a medical device. The results of the interaction simulation may be forwarded and/or synchronized (via view-manipulation means 30 and synchronization means 25) to the visualization means 20 to be displayed on at least one display means.

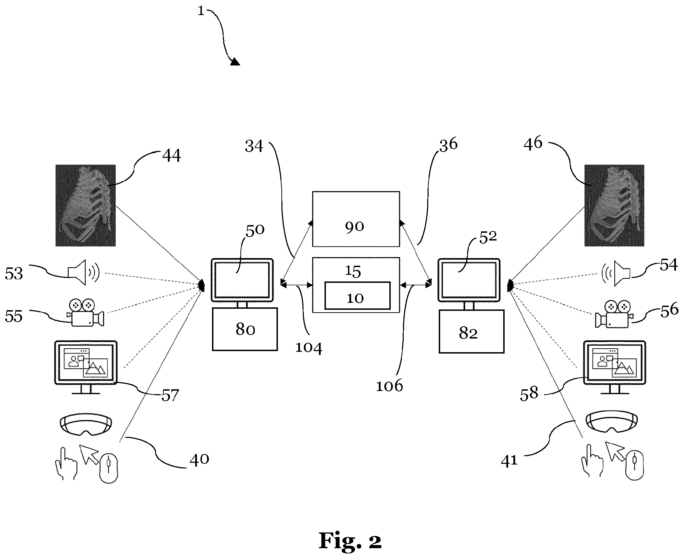

Fig. 2 is a schematic diagram of an operating principle of the collaborative system 1 in a multi-user collaboration. Each user may participate, using a separate computing device 80, 82. Each computing device 80, 82 is associated with at least one display means 50, 52. The display means 50, 52 may be a monoscopic or stereoscopic display means. Further, a computing device may be associated with multiple display means, wherein a first display means may be a monoscopic display means and a second display means may be a or stereoscopic display means. Thus, advantages of both, monoscopic and stereoscopic display means can be provided to a single user. Each display means may display a view and/or scene of a virtual medical model. In a synchronous mode each display means may show the same view/scene of the virtual medical model, wherein user specific annotations, colorations, transparency and/or the like of objects of the virtual medical model/sub-models may be allowed. Thus, multiple users may collaboratively and synchronously work on the same virtual medical model.

In an asynchronous mode, each user may work on the virtual medical model on his/her own. Thus, the respective display means may display different user specific views/scenes of the virtual medical model. A user specific view/scene may be stored for later sharing among the users of the system.

A means 10 for providing a virtual medical model may be included in and/or run on a server 15, such as a web server. The means 10 for providing the virtual medical model is configured to provide each user with the same virtual medical model. For example, the means 10 for providing the virtual medical model may be adapted to download at least one virtual medical model from a database that may be a local database or a global database, such as a cloud-based database. Further, the means 10 for providing the virtual medical model may be adapted to transmit at least one virtual medical model, or a copy thereof to each of the computing devices 80, 82. In case the virtual medical model(s) is/are amended, the virtual medical model(s) can be updated on the respective computing device(s).

On each computing device 80, 82 different means of the system 1 maybe run. For example, on each computing device 80, 82 a view-manipulation means 30, a visualization means 20 and/or a synchronization means 25 may be run, as described above with respect to Fig. 1. According to this exemplary embodiment each view-manipulation means is configured to receive a user input and to translate the user input in vision change data of the virtual medical model or a sub-model thereof. The translation may be any kind of data conversion, including the mere forwarding of the user input. An associated synchronization means, is configured to receive the vision change data (or forwarded user input), and to synchronize the received vision change data (or forwarded user input). Further, the vision change data (or user input) may be forwarded to a further synchronization means that is run on a different computing device. This further synchronization means may likewise synchronize the received vision change data (or user input) and vison change data that is based on a user input generated at said computing device. The synchronized vision change data is then transmitted to an associated visualization means to update the view and/or a scene of the virtual medical model. Thus, the signaling amount for providing a synchronous mode can be reduced, compared to conventional systems, as only vison change data have to be transmitted between the computing devices. Further, updates/amendments of the virtual medical model and/or attributes representing the ownership of an object of the virtual medical model, maybe shared between the computing devices. The synchronization means may be configured to synchronize updates/amendments of the virtual medical model and/or attributes representing the ownership of an object of the virtual medical model, to avoid conflicts.

The visualization means 20 and the synchronization means 25 may be integrally formed. Additionally, or alternatively, the visualization means 20 and the view-manipulation means 30 may be integrally formed. These means may be run browser based. Thus, there is no need for a local installation of software components of the collaborative system on a user's computing device.

In a further embodiment, the synchronization means 25 may be provide in a central manner. Thus, each view-manipulation means is configured to receive a user input 40, 41 and to translate the user input 40, 41 in vision change data 34, 36 of the virtual medical model or a sub-model thereof. The translation may be any kind of data conversion, including the mere forwarding of the user input 40, 41. This vision change data 34, 36, or user input 40, 41 (of different view-manipulation means) is transmitted to a central synchronization means. The central synchronization means is configured to receive vision change data (or forwarded user input), to synchronize the received vision change data and to transmit the synchronized vision change data to respective visualization means that are run on distinct computing devices 80, 82. Each of the visualization means is configured to receive the synchronized vision change data (which may be user specific) and based on the received data to update the view and/or a scene of the virtual medical model. In this embodiment, the signaling amount is also reduced, as only vision change data and synchronized vision change data has to be exchanged for updating a view/scene. Further, updates/amendments of the virtual medical model and/or attributes representing the ownership of an object of the virtual medical model, may be shared between the computing devices. The central synchronization means may be configured to synchronize updates/amendments of the virtual medical model and/or attributes representing the ownership of an object of the virtual medical model, to avoid conflicts.

The collaborative system 1 may be a web-based system that is configured to be run browser based. The web-based system may comprise a first server 15, such as a web server 15, that hosts the software components of the collaborative system. Accordingly, the first server 15 may allow for downloading software instructions (code) to at least one local computing device 80, 82, that is adapted to execute the respective software instructions. Thus, for example, at least one of the visualization means 20, the synchronization means 25 and the view-manipulation means 30 may be run on the at least on computing device 80, 82. Further, the first server 15 may include the means 10 for providing a virtual medical model. Accordingly, a virtual medical model (i.e. respective data 104, 106) may be downloaded from the first server 15 to at least one computing device 80, 82. Further, this first server 15 may allow for updating/amending the virtual medical model.

The first server 15 is not limited to a single server but may include a server network. The first server 15 may be configured to provide an Internet-based hypertext system for the collaborative system 1.

Additionally, a second server 90 may be provided. The second server 90 may be a streaming server and may be configured for exchange of vision change data and/or synchronized vision change data. Further, signaling, such as signaling corresponding to communication channels 53 to 58 may also be exchanged via the second server 90. The second server 90 is not limited to a single server but may include a server network.

This visual, model-based communication can be supported by a video channel 55, 56 and/or audio communication channel 53, 54. Further, screens maybe shared via a screen sharing channel 57, 58.

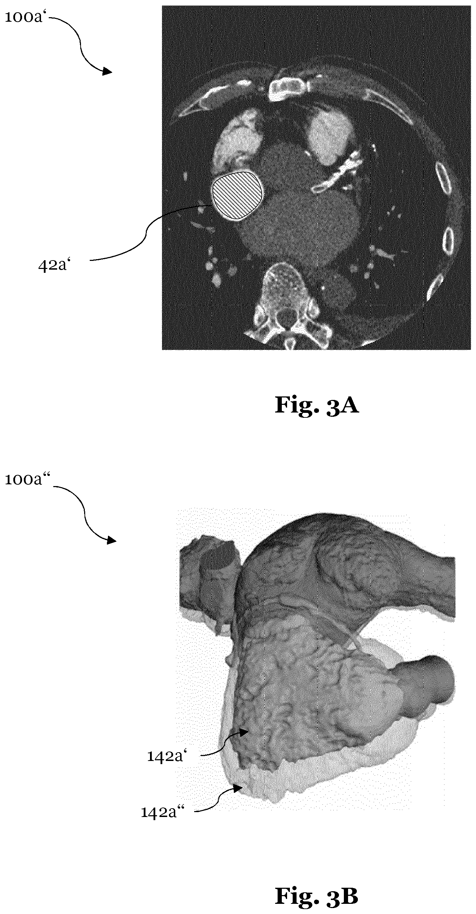

Fig. 3A is a schematic view of a virtual patient model 100a' of a virtual medical model. The virtual patient model 100a' is depicted in form of a 2D-layer, wherein an anatomical measurement 42a' is superimposed. The anatomical measurement 42a' serves for measuring an area and/or a circumference of an anatomical structure of the virtual patient model 100a'. In the example shown, area and circumference of a vessel.

Further anatomical measurements may be generated and/or amended using the above described system 1 and in particular view-manipulating means 30. Exemplary anatomical measurements include information about dimensions, surfaces, and/or volumes (1D measurements and of higher dimensions), including coordinates of data points and type of measurements.

Fig. 3B is a schematic view of a further virtual patient model 100a" of a virtual medical model. The virtual patient model 100a" is depicted in form of a three-dimensional view. This three-dimensional view may be displayed on a monoscopic and/or stereoscopic display means, including VR and/or XR. The virtual patient model 100a" includes at least two sub-models 142a' and 142a" showing different shapes of the same anatomical structure, allowing for anatomical comparison. Here, a model of a human heart is shown, wherein sub-model 142a' represents the heart in a diastolic phase and sub-model 142a" the heart in a systolic phase. Thus, the different sub-models allow for anatomical comparison of a structure in different states. In a further example, a difference in shape may represent a pathological alteration of the anatomical structure in the same patient. Thus, the progress of a pathological alteration can be determined and analyzed using the described system.

Further, the difference in shape may for example represent different configurations of the anatomical structure in different patients. Thus, the system allows for medical device development considering the fitting of a medical device for a large population. Still further, the difference in shape may for example represent growth of the anatomical structure, thereby allowing facilitated development of pediatric medical devices.

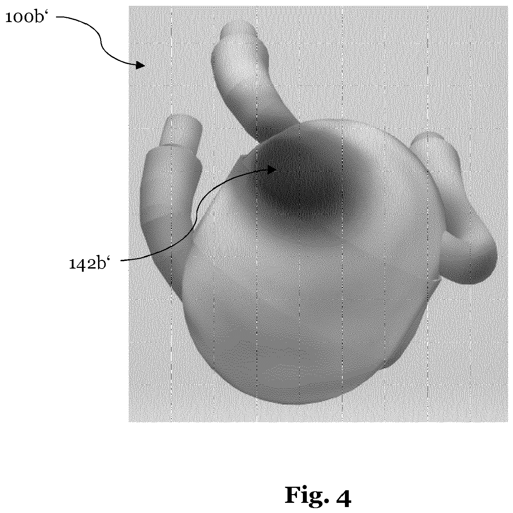

Fig. 4 is a visualization of an output of an interaction simulation means 70. Particularly, a model of a medical device 100b' is shown. The model of the medical device 100b' is superimposed with the results of a collision detection, wherein a collision zone 142b' is highlighted. The collision zone 142b' may be determined using an interaction simulation means 70 of the system 1. The interaction simulation means 70 may be configured to simulate interaction, such as collision, between a virtual patient model (not shown) and a virtual model of a medical device 100b'.

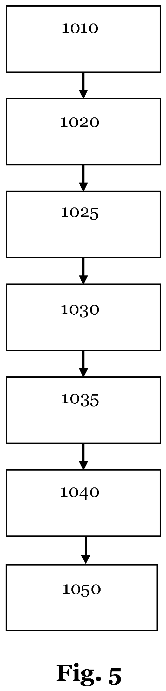

Fig. 5 is a schematic diagram of a method 1000 for collaborative visual analysis of a virtual medical model, particularly for medical product development and/or for anatomical comparison by multiple users. The method may be carried out by a system, as described above (cf. e.g. Fig. 1). The method comprises the steps of:
- providing 1010 a virtual medical model;
- generating 1020 a view and/or a scene of the virtual medical model, and sending image data representing the generated view and/or scene to a display means;
- optionally, automatically aligning 1025 a virtual model of a medical device within a virtual patient model;
- receiving 1030 a user input and translating the user input in vision change data of the virtual medical model or a sub-model thereof;
- optionally simulating 1035 an interaction, such as an collision, between at least one of a virtual patient model of the virtual medical model and/or a virtual model of a medical device with at least one of at least one further virtual patient model of the virtual medical model and/or at least one further virtual model of a medical device,
- synchronizing 1040 vision change data, and
- updating 1050 the view and/or a scene of the virtual medical model based on the synchronized vision change data of the virtual medical model or a sub-model thereof.

### List of reference signs

- 1: collaborative system
- 10: means for providing a virtual medical model
- 15: web server
- 20: visualization means
- 25: synchronization means
- 30: view-manipulation means
- 34,36: vision change data
- 40, 41: user input
- 42: annotation
- 42a': annotation
- 44: generated view
- 46: generated view
- 50, 52: display means
- 53, 54: audio communication
- 55, 56: video communication
- 57, 58: screen sharing
- 60: guidance means
- 70: interaction simulation means
- 80, 82: computing device
- 90: server
- 100a, b, c: virtual medical model
- 100a': virtual medical model
- 100a": virtual medical model
- 100b': model of a medical device
- 104, 106: virtual medical model data
- 142a', 142a": sub-models
- 142b': collision zone
- 120: amendments of virtual patient model
- 122: updates for a model of a medical device
- 1000: method
- 1010: providing a virtual medical model;
- 1020: generating a view and/or a scene of the virtual medical model,
- 1025: aligning a virtual model of a medical device within a virtual patient model
- 1030: receiving a user input and translating the user input in vision change data
- 1035: simulating an interaction
- 1040: synchronizing vision change data
- 1050: updating the view and/or a scene of the virtual medical model

## Claims

1. A collaborative system (1) for visual analysis of a virtual medical model (100), particularly for medical product development and/or for anatomical comparison by multiple users, the collaborative system comprising
a means (10) for providing a virtual medical model (100a, 100b, 100c);
at least one visualization means (20), for generating a view and/or a scene of the virtual medical model (100a, 100b, 100c), the visualization means (20) being configured to send image data representing the generated view and/or scene to a display means (50, 52);
at least one view-manipulation means (30), that allows manipulating a view of the virtual medical model (100a, 100b, 100c) by at least one user, the view-manipulation means (30) is configured to receive a user input (40) and to translate the user input (40) in vision change data (34) of the virtual medical model (100a, 100b, 100c) or a sub-model thereof,
a synchronization means (25), that is configured to receive vision change data, to synchronize the received vision change data and to transmit the synchronized vision change data to the at least one visualization means (20),
wherein the at least one visualization means (20) is configured to receive the synchronized vision change data (34) and based on the received data to update the view and/or a scene of the virtual medical model (100a, 100b, 100c).

2. The collaborative system (1) according to claim 1, wherein the virtual medical model (100a, 100b, 100c) comprises at least one virtual patient model and/or at least one virtual model of a medical device, the collaborative system (1) further comprising
a guidance means (60) that supports aligning a virtual model of a medical device (100b) within a virtual patient model (100a).

3. The collaborative system (1) according to any preceding claim, further comprising
an interaction simulation means (70), that is configured to simulate interaction between at least one of a virtual patient model (100a) of the virtual medical model (100) and/or a virtual model of a medical device (100b) with at least one of at least one further virtual patient model of the virtual medical model and/or at least one further virtual model of a medical device.

4. The collaborative system (1) according to any preceding claim, wherein the at least one visualization means (20), sends image data to at least one display means (50, 52) that may be a monoscopic display and/or a stereoscopic display, and wherein the image data representing the generated view and/or scene maybe superimposed with further image data.

5. The collaborative system (1) according to any preceding claim, wherein the system comprises multiple view-manipulation means (30, 32), each of the view-manipulation means being associated with a user and allows the user manipulating a view of the virtual medical model, wherein
the view-manipulation means is configured to receive a user specific user input (40) and to translate the user specific user input in user specific vision change data (34) of the virtual medical model or a sub-model thereof, wherein
the synchronization means (25), is configured to receive user specific vision change data, to synchronize the received user specific vision change data and to transmit user specific synchronized vision change data to the at least one visualization means (20), wherein
the at least one view-manipulation means (20) is configured to receive the user specific vision change data (34) and based on the received data to update the view and/or a scene of the virtual medical model user specifically.

6. The collaborative system (1) according to any preceding claim, wherein the system is configured to store a generated view and/or a scene of the virtual medical model (100) and/or vision change data (34) of the virtual medical model or a sub-model thereof.

7. The collaborative system (1) according to any preceding claim, wherein the system is a web-based system that is configured to be run browser based.

8. The collaborative system (1) according to any preceding claim, further providing a communication channel for the users, wherein the communication channel may be a video and/or audio communication channel (53, 54; 55, 56) and/or may allow for screen sharing (57, 58).

9. The collaborative system (1) according to any preceding claim, wherein the visualization means (20) is configured to highlight interaction between different sub-models of the virtual medical model and/or different virtual patient models.

10. The collaborative system (1) according to any preceding claim, further comprising a means for updating and/or amending the virtual medical model.

11. The collaborative system (1) according to any preceding claim, wherein the synchronization means (25) is configured to prioritize vison change data associated with user input received from different users and/or block vison change data associated with user input received from at least one user.

12. A method (1000) for collaborative visual analysis of a virtual medical model, particularly for medical product development and/or for anatomical comparison by multiple users, the method comprising
providing (1010) a virtual medical model;
generating (1020) a view and/or a scene of the virtual medical model, and sending image data representing the generated view and/or scene to a display means;
receiving (1030) a user input and translating the user input in vision change data of the virtual medical model or a sub-model thereof;
synchronizing (1040) the vision change data, and
updating (1050) the view and/or a scene of the virtual medical model based on the synchronized vision change data of the virtual medical model or a sub-model thereof.

13. The method (1000) according to claim 12, further comprising automatically aligning (1025) a virtual model of a medical device within a virtual patient model.

14. The method (1000) according to any preceding method claim, further comprising simulating (1035) an interaction between at least one of a virtual patient model, of the virtual medical model and/or a virtual model of a medical device with at least one of at least one further virtual patient model of the virtual medical model and/or at least one further virtual model of a medical device.

15. Computer program comprising instructions that, when being carried out by at least one processor, cause the processor to perform for performing a method (1000) according to any one of claims 12 to 14.
